# EUROPEAN PATENT APPLICATION

(11) **EP 2 717 164 A1**
(43) Date of publication of application: **09.04.2014**
(21) Application number: 11777263.2
(22) Date of filing: 30.05.2011
(51) Int. Cl.: G06F 12/00

(54) **METHOD AND APPARATUS FOR ACCESSING DATA STORAGE DEVICE**

(71) Applicant: Huawei Device Co., Ltd., Longgang District Shenzhen Guangdong 518129 (CN)
(72) Inventor: LI, Peng, Shenzhen Guangdong 518129 (CN)
(74) Representative: Haley, Stephen
(86) International application number: PCT/CN2011/074902
(87) International publication number: WO 2011/137844

(57) **Abstract**

Embodiments of the present invention provide a method and an apparatus for accessing a data storage device. The method includes: receiving a formatting instruction on a FAT file system; obtaining, according to correspondence between area of the data storage device and sector information, first sector information corresponding to an MBR partition, second sector information corresponding to a hidden partition, and third sector information corresponding to a FAT partition; and performing a formatting operation on sectors identified by the first sector information, the second sector information, and the third sector information. In the embodiments of the present invention, because a hidden sector of the data storage device is formatted, a hidden partition formed after the formatting can be effectively used for data storage, thereby improving the data storage efficiency of the data storage device.

## Description

### TECHNICAL FIELD

Embodiments of the present invention relate to data processing technologies, and in particular, to a method and an apparatus for accessing a data storage device.

### BACKGROUND

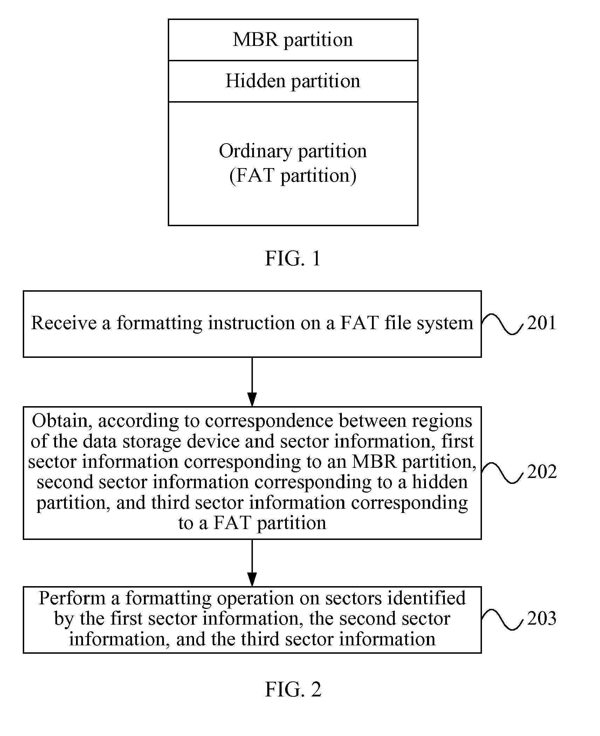

FIG. 1 is a schematic diagram of a storage structure of a file allocation table (File Allocation Table, FAT for short) file system in a data storage device. As shown in FIG. 1, a FAT partition is used for storing data of the FAT file system; a main boot record (Main Boot Record, MBR for short) partition is an important boot sector, and is used for initialization and correct use of the FAT file system; a logical location of a hidden sector is between the MBR partition and the FAT partition, and the space occupied by the hidden sector is not used in the FAT file system. When a terminal communicates with the data storage device, the terminal may access the FAT partition in the data storage device to store and read data.
However, because the space occupied by the hidden sector in the data storage device is not used, the data storage efficiency of the data storage device is reduced.

### SUMMARY

Embodiments of the present invention provide a method and an apparatus for accessing a data storage device, so as to improve the data storage efficiency of the data storage device.
An embodiment of the present invention provides a method for accessing a data storage device, including:
receiving a formatting instruction on a FAT file system;
obtaining, according to correspondence between area of the data storage device and sector information, first sector information corresponding to an MBR partition, second sector information corresponding to a hidden partition, and third sector information corresponding to a FAT partition; and
performing a formatting operation on sectors identified by the first sector information, the second sector information, and the third sector information.

An embodiment of the present invention further provides an apparatus for accessing a data storage device, including:
a receiving module, configured to receive a formatting instruction on a FAT file system;
an obtaining module, configured to obtain, according to correspondence between area of the data storage device and sector information, first sector information corresponding to an MBR partition, second sector information corresponding to a hidden partition, and third sector information corresponding to a FAT partition; and
an operation module, configured to perform a formatting operation on sectors identified by the first sector information, the second sector information, and the third sector information.

As can be known from the technical solutions, in the embodiment of the present invention, after the formatting instruction on the FAT file system is received, the first sector information corresponding to the MBR partition, the second sector information corresponding to the hidden partition, and the third sector information corresponding to the FAT partition are obtained according to the correspondence between the area of the data storage device and the sector information, so that the formatting operation can be performed on the sectors identified by the first sector information, the second sector information, and the third sector information. Because the hidden sector of the data storage device is formatted, the hidden partition formed after the formatting can be effectively used for data storage, thereby improving the data storage efficiency of the data storage device.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a schematic diagram of a storage structure of a FAT file system in a data storage device;
FIG. 2 is a schematic flow chart of a method for accessing a data storage device according to Embodiment 1 of the present invention;
FIG. 3 is a schematic flow chart of a method for accessing a data storage device according to Embodiment 2 of the present invention;
FIG. 4 is a schematic diagram of a structure of an apparatus for accessing a data storage device according to Embodiment 3 of the present invention;
FIG. 5 is a schematic diagram of another structure of an apparatus for accessing a data storage device according to Embodiment 3 of the present invention; and
FIG. 6 is a schematic structural diagram of another structure of an apparatus for accessing a data storage device according to Embodiment 3 of the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

It should be noted that, a data storage device involved in embodiments of the present invention may include, but is not limited to, a secure digital (Secure Digital, SD for short) card, a TF (Trans Flash, TF for short) card, and a multimedia card (Multimedia Card, MMC for short).

FIG. 2 is a schematic flow chart of a method for accessing a data storage device according to Embodiment 1 of the present invention. As shown in FIG. 2, the method for accessing a data storage device in this embodiment may include the following steps:
Step 201: Receive a formatting instruction on a FAT file system.
Step 202: Obtain, according to correspondence between area of the data storage device and sector information, first sector information corresponding to an MBR partition, second sector information corresponding to a hidden partition, and third sector information corresponding to a FAT partition. Specifically, hidden partition information may be obtained; the area of the data storage device may be partitioned into the MBR partition, the hidden partition, and the FAT partition according to algorithm implementation of the FAT file system and the obtained hidden partition information; and correspondence between the partitioned area (that is, the MBR partition, the hidden partition, and the FAT partition) of the data storage device and the sector information (that is, the first sector information, the second sector information, and the third sector information) may be established according to the partitioned area of the data storage device. For example, the area of the data storage device are partitioned into the MBR partition, the hidden partition, and the FAT partition by combining an initial sector and a size of the hidden partition that are indicated by the obtained hidden partition information, and an initial sector and a size of the MBR partition that are indicated by the algorithm implementation of the FAT file system, and an initial sector and a size of the FAT partition that are indicated by the algorithm implementation of the FAT file system. In this way, the area of the data storage device can be partitioned into three partitions, namely, the MBR partition, the hidden partition, and the FAT partition.
Step 203: Perform a formatting operation on sectors identified by the first sector information, the second sector information, and the third sector information.
   Further, after step 203, password protection may be further performed on a hidden partition created after the formatting operation is performed on the hidden sector identified by the second sector information, so that the security and reliability of data stored in the data storage device are not decreased when the FAT partition in the data storage device cannot be encrypted.
   In this embodiment, after the formatting instruction on the FAT file system is received, the first sector information corresponding to the MBR partition, the second sector information corresponding to the hidden partition, and the third sector information corresponding to the FAT partition are obtained according to the correspondence between the area of the data storage device and the sector information, so that the formatting operation can be performed on the sectors identified by the first sector information, the second sector information, and the third sector information. Because the hidden sector of the data storage device is formatted, the hidden partition formed after the formatting can be effectively used for data storage, thereby improving the data storage efficiency of the data storage device.

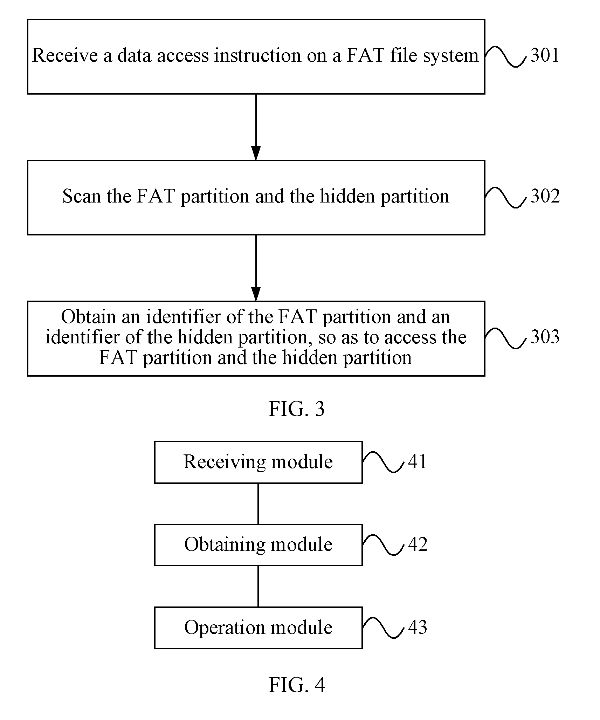

   FIG. 3 is a schematic flow chart of a method for accessing a data storage device according to Embodiment 2 of the present invention. As shown in FIG. 3, compared with the previous embodiment, after step 203, the method for accessing a data storage device in this embodiment may further include the following steps:
Step 301: Receive a data access instruction on the FAT file system.
Step 302: Scan the FAT partition and the hidden partition.
Step 303: Obtain an identifier of the FAT partition and an identifier of the hidden partition, so as to access the FAT partition and the hidden partition.

In this embodiment, after the data access instruction on the FAT file system is received, the FAT partition and the hidden partition are scanned, so that the identifier of the FAT partition and the identifier of the hidden partition can be obtained, so as to access the FAT partition and the hidden partition. Because a hidden sector of the data storage device is formatted, the hidden partition formed after the formatting can be effectively used for data storage, thereby improving the data storage efficiency of the data storage device.

In order to make the method provided by the embodiments of the present invention more comprehensible, the following uses an SD card as an example. A FAT partition is created after an existing SD card is formatted, and the entire space of the SD card includes an MBR partition, a hidden sector and a FAT partition. The space occupied by the hidden sector is not used in the FAT file system, a logical location of the hidden sector is between the MBR partition and the FAT partition, and a size of the hidden sector may be determined by the FAT file system, or may also adopt a self-defined manner. In the method for accessing a data storage device according to the embodiment of the present invention, the corresponding hidden partition may be created by using the hidden sector, and password protection may further be performed. Therefore, not only the space of the SD card can be appropriately used, but also an additional auxiliary storage function can be provided for a user who uses the data storage device.

To distinguish the hidden partition from other partitions, a non-hidden partition (FAT partition) may be referred to as an ordinary partition in the embodiment of the present invention. As can be known according to a Windows file system protocol, content in the hidden sector is invisible when the data storage device is connected to a personal computer (Personal computer, PC for short), and an ordinary partition created after the data storage device is formatted is accessible in the PC. In this embodiment, both the hidden partition and the ordinary partition may be managed by a file management module in a terminal device (such as a mobile phone, and a PC). In this embodiment, a formatting operation may be performed on the SD card (an MBR sector corresponding to the MBR partition, the hidden sector corresponding to the hidden partition, and an ordinary sector corresponding to the ordinary partition) according to a received user instruction. If a user instruction indicates not selecting to create a hidden partition, the SD card is formatted into " an MBR + an ordinary partition" according to a size of the SD card. If a user instruction indicates creating a hidden partition and indicates a size of the hidden partition, a size of the ordinary partition is obtained by subtracting the size of the hidden partition from the size of the entire space of the SD card (an MBR is only 512 bytes, and the size can be ignored). In addition to creating an ordinary partition by formatting, a hidden partition is created by using the space of the hidden sector, the format of the hidden partition uses a FAT file system format and is separately managed, and the SD card is formed by "an MBR + a hidden partition + an ordinary partition". Further, password protection (that is, setting a password for the hidden partition) may be performed on the hidden partition according to a received user instruction. If the user instruction indicates performing password protection on the hidden partition, a file management module needs to provide a password for verification when accessing the hidden partition. If the user instruction indicates not performing password protection on the hidden partition, a file management module does not need to provide a password for verification when accessing the hidden partition.

Because the hidden partition is managed by the file management module of the terminal device, when the file management module is entered and the hidden partition is to be accessed, if the hidden partition has password protection, the hidden partition can be accessed only when a correct password is entered. When the correct password is entered, the file management module enables access permission on the hidden partition, and registers the permission in a mobile phone. In this case, the hidden partition can be accessed. The hidden partition cannot be accessed when the password is incorrect. When the file management module is exited, the file management module revokes the access permission on the hidden partition. In this case, the hidden partition has password protection, and the password needs to be entered again for verification during next access. In the method for accessing a data storage device according to the embodiment of the present invention, the hidden sector between the MBR partition and FAT partition is appropriately used according to a file system structure of the SD card, and the hidden sector is formatted as a hidden partition. In the case that the original function of the SD card is not affected, the unused space of the FAT file system in the SD card is appropriately used, thereby improving the space utilization of the SD card. Password protection is performed on the hidden partition, so as to provide a hidden partition with access permission for a user, which effectively protects data security of the user, thereby achieving access to the private data of the user.

It should be noted that, to simplify the description, the foregoing method embodiments are described as a series of action combination. However, persons skilled in the art should know that the present invention is not limited to any described sequence of the action, as some steps can adopt other sequences or can be performed simultaneously according to the present invention. Secondly, persons skilled in the art should know that the embodiments described in the specification all belong to exemplary embodiments and the involved actions and modules are not essential for the present invention.

In the foregoing embodiments, description of each embodiment has its emphasis, for the part not described in detail in an embodiment, reference may be made to related description in other embodiments.

FIG. 4 is a schematic diagram of a structure of an apparatus for accessing a data storage device according to Embodiment 3 of the present invention. As shown in FIG. 4, the apparatus for accessing a data storage device in this embodiment may include a receiving module 41, an obtaining module 42, and an operation module 43. The receiving module 41 is configured to receive a formatting instruction on a FAT file system. The obtaining module 42 is configured to obtain, according to correspondence between area of the data storage device and sector information, first sector information corresponding to an MBR partition, second sector information corresponding to a hidden partition, and third sector information corresponding to a FAT partition. The operation module 43 is configured to perform a formatting operation on sectors identified by the first sector information, the second sector information, and the third sector information that are obtained by the obtaining module 42.

The methods in Embodiment 1 and Embodiment 2 of the present invention both may be implemented by the apparatus for accessing a data storage device according to the embodiment of the present invention.

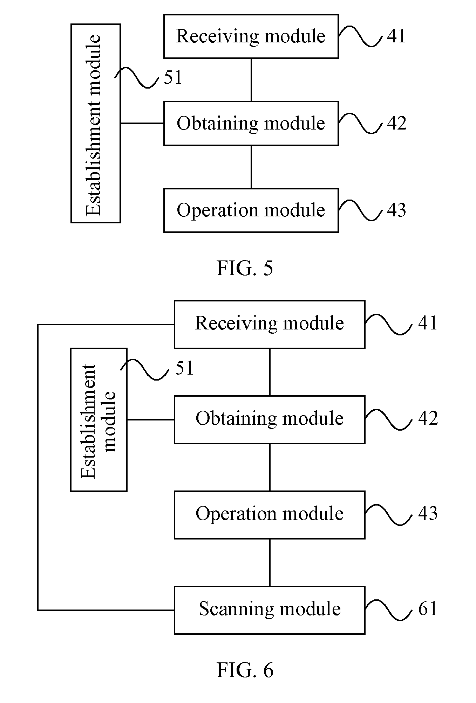

Further, as shown in FIG. 5, the apparatus for accessing a data storage device in this embodiment may further include an establishment module 51, configured to establish the correspondence between the area of the data storage device and the sector information. Specifically, the establishment module 51 specifically may obtain hidden partition information; partition the area of the data storage device into the MBR partition, the hidden partition, and the FAT partition according to algorithm implementation of the FAT file system and the obtained hidden partition information; and establish the correspondence between the partitioned area of the data storage device (that is, the MBR partition, the hidden partition, and the FAT partition) and the sector information (that is, the first sector information, the second sector information, and the third sector information), so that the obtaining module 42 obtains the first sector information corresponding to the MBR partition, the second sector information corresponding to the hidden partition, and the third sector information corresponding to the FAT partition.

Further, the operation module 43 in this embodiment may further be configured to perform password protection on the hidden partition.

Further, the receiving module 41 in this embodiment may further receive a data access instruction on the FAT file system. Correspondingly, as shown in FIG. 6, the apparatus for accessing a data storage device in this embodiment may further include a scanning module 61, configured to scan the FAT partition and the hidden partition, and obtain an identifier of the FAT partition and an identifier of the hidden partition, so as to access the FAT partition and the hidden partition.

In this embodiment, after the receiving module receives the formatting instruction on the FAT file system, the obtaining module obtains, according to the correspondence between the area of the data storage device and the sector information, the first sector information corresponding to the MBR partition, the second sector information corresponding to the hidden partition, and the third sector information corresponding to the FAT partition, so that the operation module can perform the formatting operation on the sectors identified by the first sector information, the second sector information, and the third sector information. Because a hidden sector of the data storage device is formatted, the hidden partition formed after the formatting can be effectively used for data storage, thereby improving the data storage efficiency of the data storage device.

Persons of ordinary skill in the art may understand that, all or a part of the steps of the foregoing method embodiments may be implemented by a program instructing related hardware. The foregoing programs may be stored in a computer readable storage medium. When the program runs, the foregoing steps of the foregoing method embodiments are performed. The foregoing storage medium includes various mediums capable of storing program code, such as a ROM, a RAM, a magnetic disk, or an optical disc.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments, or make equivalent replacements to some technical features thereof, without departing from the spirit and scope of the technical solutions of the embodiments of the present invention.

## Claims

1. A method for accessing a data storage device, comprising:
receiving a formatting instruction on a file allocation table FAT file system;
obtaining, according to correspondence between area of the data storage device and sector information, first sector information corresponding to a main boot record MBR partition, second sector information corresponding to a hidden partition, and third sector information corresponding to a FAT partition; and
performing a formatting operation on sectors identified by the first sector information, the second sector information, and the third sector information.

2. The method according to claim 1, further comprising:
establishing the correspondence between the area of the data storage device and the sector information.

3. The method according to claim 2, wherein the establishing the correspondence between the area of the data storage device and the sector information comprises:
obtaining hidden partition information;
partitioning the area of the data storage device into the MBR partition, the hidden partition, and the FAT partition according to algorithm implementation of the FAT file system and the obtained hidden partition information; and
establishing the correspondence between the partitioned MBR partition, hidden partition, and FAT partition and the first sector information, the second sector information, and the third sector information.

4. The method according to claim 1, wherein after the performing a formatting operation on a sector identified by the second sector information, the method further comprises:
performing password protection on the hidden partition.

5. The method according to any one of claims 1 to 4, wherein after the performing a formatting operation on sectors identified by the first sector information, the second sector information, and the third sector information, the method further comprises:
receiving a data access instruction on the FAT file system;
scanning the FAT partition and the hidden partition; and
obtaining an identifier of the FAT partition and an identifier of the hidden partition, so as to access the FAT partition and the hidden partition.

6. An apparatus for accessing a data storage device, comprising:
a receiving module, configured to receive a formatting instruction on a file allocation table FAT file system;
an obtaining module, configured to obtain, according to correspondence between area of the data storage device and sector information, first sector information corresponding to a main boot record MBR partition, second sector information corresponding to a hidden partition, and third sector information corresponding to a FAT partition; and
an operation module, configured to perform a formatting operation on sectors identified by the first sector information, the second sector information, and the third sector information.

7. The apparatus according to claim 6, further comprising an establishment module, configured to:
establish the correspondence between the area of the data storage device and the sector information.

8. The apparatus according to claim 7, wherein the establishment module is specifically configured to:
obtain hidden partition information; partition the area of the data storage device into the MBR partition, the hidden partition, and the FAT partition according to algorithm implementation of the FAT file system and the obtained hidden partition information; and establish the correspondence between the partitioned MBR partition, hidden partition, and FAT partition and the first sector information, the second sector information, and the third sector information.

9. The apparatus according to claim 6, wherein the operation module is further configured to:
perform password protection on the hidden partition.

10. The apparatus according to any one of claims 6 to 9, wherein the receiving module is further configured to receive a data access instruction on the FAT file system; and the apparatus further comprises:
a scanning module, configured to scan the FAT partition and the hidden partition; and obtain an identifier of the FAT partition and an identifier of the hidden partition, so as to access the FAT partition and the hidden partition.
